# EUROPÄISCHE PATENTSCHRIFT

(11) **EP 3 940 282 B1**
(45) Veröffentlichungstag und Bekanntmachung des Hinweises auf die Patenterteilung: **26.02.2025**
(21) Anmeldenummer: 21181516.2
(22) Anmeldetag: 24.06.2021
(51) Int. Cl.: F16L 23/14, F16L 25/00, F24F 13/02

(54) **LUFTKANAL MIT RECHTECKIGEN LUFTKANALELEMENTEN**
AIR DUCT WITH RECTANGULAR AIR DUCT ELEMENTS
CANAL D'AIR POURVU D'ÉLÉMENTS DE CANAL D'AIR RECTANGULAIRES

(30) Priorität: 16.07.2020 DE 202020104104 U
(43) Veröffentlichungstag der Anmeldung: 19.01.2022
(73) Patentinhaber: Gebhardt-Stahl GmbH, 59457 Werl (DE); Bevego Byggplåt & Ventilation AB, 441 24 Alingsås (SE)
(72) Erfinder: Brechlin, Lars, 58708 Menden (DE); Sahlqvist, Johan, 441 24 Alingsås (SE)
(74) Vertreter: Meinke, Jochen

(56) Entgegenhaltungen:
- CA-A- 1 208 572
- US-A- 4 466 641
- US-A- 4 739 802
- US-A1- 2012 204 386

## Beschreibung

Die Erfindung betrifft einen Luftkanal mit den Merkmalen des Oberbegriffs des Patentanspruchs 1.

Ein solcher Luftkanal ist aus US 4 446 641 A und US 4 739 802 A bekannt.

Luftkanäle zu Klimatisierungszwecken bestehen in der Regel aus aneinandergesetzten, im Querschnitt rechteckigen Luftkanalelementen aus Blech. Zum Verbinden der Luftkanalelemente ist es bekannt, an deren Enden jeweils ein flanschförmiges Rahmenprofil vorzusehen. Dieses Rahmenprofil kann aus vier Flanschprofilen und in die Flanschprofile eingesteckten Eckwinkeln gebildet sein. Ein solches Flanschprofil ist z.B. aus DE 20 2016 101 970 U1 bekannt. Bei bekannten Luftkanälen wird das Rahmenprofil auf die Enden der Luftkanalelemente aufgeschoben, wobei die Kanalwände in die Einsteckbereiche der Flanschprofile eingesteckt und in diesen aufgenommen sind. Die Rahmenprofile benachbarter Luftkanalelemente werden mittels Klemmelementen und/oder Schrauben verbunden, wobei ein klammerartiges Klemmelement von der Seite über zwei benachbarte Rahmenprofile mit jeweils außenseitiger Wulst geschoben wird und beidseitig die Wülste klemmend umgreift. Alternativ sind auch Luftkanalelemente bekannt, bei denen das jeweilige Flanschprofil einstückig mit der zugeordneten Kanalwand ausgebildet ist.

Bei der Montage eines Luftkanales werden die einzelnen, mit Rahmenprofilen ausgerüsteten Luftkanalelemente nach und nach aneinander montiert, wobei in der Regel die schon montierten Luftkanalelemente an einer Raumdecke aufgehängt sind, so dass die Montage des nächsten Luftkanalelementes im Normalfall nicht von einer Person allein durchgeführt werden kann.

Aufgabe der Erfindung ist, die Montage von aus einzelnen Luftkanalelementen bestehenden Luftkanälen wesentlich zu vereinfachen.

Diese Aufgabe wird mit einem Luftkanal der eingangs bezeichneten Art erfindungsgemäß durch die kennzeichnenden Merkmale des Patentanspruchs 1 gelöst

Durch diese Gestaltung des jeweiligen Klemmelementes und der jeweiligen Wulst ist es möglich, zwei zugeordnete Flanschprofile von benachbarten Luftkanalelementen auf einfache Weise über ein C-förmiges Klemmelement zu verbinden. Dazu wird das C-förmige Klemmelement zunächst auf ein unteres Flanschprofil eines bereits montierten Luftkanalelementes aufgesteckt bzw. aufgeschoben und kann aufgrund der Gestaltung der Wulst des Flanschprofiles um ein gewisses Maß (z.B. 40°) nach unten kippen. Das zugeordnete Flanschprofil eines nächsten Luftkanalelementes (und damit das nächste Luftkanalelement) kann dann einfach mit seiner entsprechend gestalteten Wulst in das andere Ende des C-förmigen Klemmelementes eingehängt werden. Anschließend wird es gemeinsam mit dem Luftkanalelement nach oben geschwenkt und in der Endmontageposition am bereits montierten Luftkanalelement befestigt. Auf diese Weise wird die Montage wesentlich vereinfacht und kann von einer Person durchgeführt werden.

Dabei ist nach einer ersten Ausgestaltung vorgesehen, dass das jeweilige Flanschprofil ein Einzelprofil ist, das auf einen Einsteckrand einer Kanalwand des jeweiligen Luftkanalelementes aufgeschoben bzw. aufgesteckt ist.

Nach einer zweiten alternativen Ausgestaltung ist vorgesehen, dass das jeweilige Flanschprofil einstückig mit der zugeordneten Kanalwand des jeweiligen Luftkanalelementes ausgebildet ist, d.h. das Flanschprofil ist dann integraler Bestandteil der jeweiligen Kanalwand.

In bevorzugter Ausgestaltung ist vorgesehen, dass der bogenförmige erste Profilbereich einen Winkel zwischen 210° und 240° einschließt.

Der zweite Profilbereich ist eben ausgebildet.

Die Erfindung ist nachstehend anhand der Zeichnung beispielhaft näher erläutert.

Diese zeigt in
- Fig. 1: in perspektivischer Darstellung ein mit Flanschprofilen bestücktes einbaufertiges Luftkanalelement,
- Fig. 2: eine Seitenansicht eines Flanschprofiles,
- Fig. 3: eine Seitenansicht eines ersten Luftkanalelementes mit eingehängtem Klemmelement,
- Fig. 4: ein vergrößertes Detail C in Fig. 3,
- Fig. 5: eine Seitenansicht eines zweiten, in das am ersten Luftkanalelement hängende Klemmelement eingehängten Luftkanalelementes,
- Fig. 6: ein vergrößertes Detail B in Fig. 5,
- Fig. 7: eine Seitenansicht der beiden in Endlage aneinander montierten Luftkanalelemente und in
- Fig. 8: ein vergrößertes Detail A in Fig. 7.

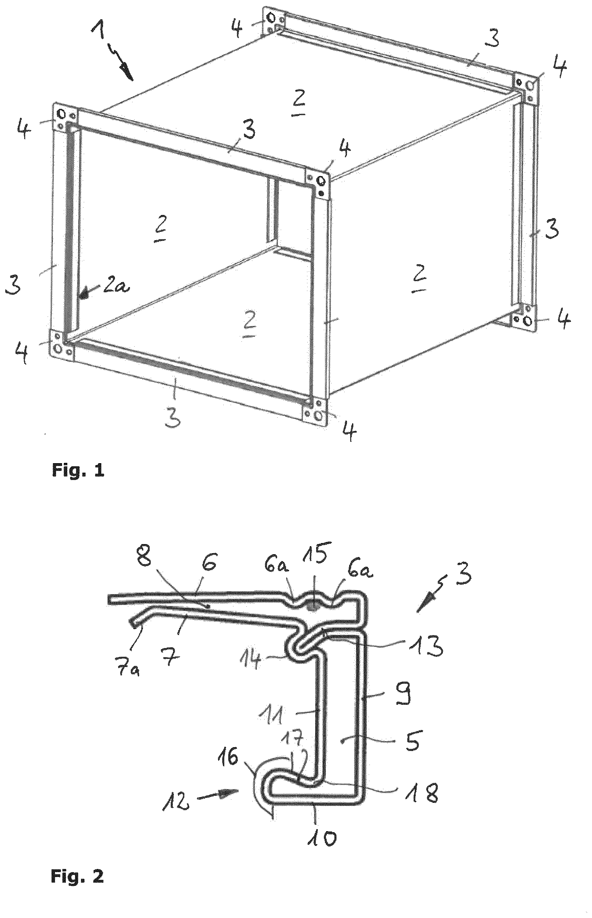

In Fig. 1 ist ein einzelnes Luftkanalelement 1 dargestellt, welches aus einem rechteckigen Rohr gebildet ist. Dabei ist jede Wand des Rohres von einer einzelnen Kanalwand 2 (vorzugsweise aus Blech) gebildet, wobei alle Kanalwände 2 in der Regel einstückig und umlaufend dicht miteinander verbunden sind. Auf jeden der Einsteckränder 2a der jeweiligen Kanalwand 2 ist jeweils ein nachfolgend näher beschriebenes Flanschprofil 3 aufgeschoben, so dass sich die Flanschprofile 3 über das Luftkanalelement 1 hinaus nach außen erstrecken. In den Eckrandbereichen sind Eckwinkel 4 in Kammern 5 der Flanschprofile 3 so eingeschoben, dass ein Rahmenprofil mit im Wesentlichen gleichförmiger Rahmenfläche gebildet ist, die an der Rahmenfläche eines benachbarten Luftkanalelementes 1 gleicher Bauart befestigt wird, was nachfolgend näher beschrieben wird. Dabei wird in bekannter Weise zwischen zwei benachbarten Flanschprofilen 3 eine Dichtung angeordnet, die nicht dargestellt ist.

Das jeweilige Flanschprofil 3 ist von einem vorzugsweise kaltgewalzten Blech gebildet. Alternativ kann es z.B. auch aus stranggepresstem Aluminium oder extrudiertem Kunststoff bestehen. Dabei weist das Flanschprofil 3 einen von einem inneren und einem äußeren Profilschenkel 6, 7 gebildeten, einseitig offenen schlitzförmigen Einführbereich 8 auf, der in der Gebrauchslage über den Einsteckrand 2a einer Kanalwand 2 geschoben wird. Dabei kann der äußere Profilschenkel 7 eine Einführschräge 7a aufweisen. Ferner weist das Flanschprofil 3 winklig zum schlitzförmigen Einführbereich 8 die Kammer 5 zur Aufnahme eines Eckwinkels 4 auf. Die Kammer 5 ist von wenigstens einem ersten ebenen, an den inneren Profilschenkel 6 angrenzenden Profilsteg 9, einem daran rechtwinklig angrenzenden zweiten Profilsteg 10 und einem daran winklig angrenzenden dritten Profilsteg 11 begrenzt ist, der in den äußeren Profilschenkel 7 übergeht. Dabei ist der Übergangsbereich zwischen dem zweiten und dem dritten Profilsteg 10, 11 als nach außen gerichtete Wulst 12 ausgebildet.

Zwischen dem inneren Profilschenkel 6 und dem ersten Profilsteg 9 kann ein doppellagiger Profilbereich 13 und zwischen dem dritten Profilsteg 11 und dem äußeren Profilschenkel 7 kann eine Auswölbung 14 vorgesehen sein, in die der doppellagige Profilbereich 13 endseitig eingreift. Außerdem kann der innere Profilschenkel 6 am Ende des schlitzförmigen Einführbereiches zwei rillenförmige Einbuchtungen 6a und dazwischen ein Dichtmittel 15 aufweisen, das zur Abdichtung des Einsteckrandes 2a der jeweiligen Kanalwand 2 dient.

Wesentlich ist nun, dass die Wulst 12 von einem an den zweiten Profilsteg 10 angrenzenden bogenförmigen ersten Profilbereich 16 und einem daran angrenzenden, zum zweiten Profilsteg 11 gerichteten, einen Hinterschnitt bildenden zweiten Profilbereich 17 gebildet ist, der umgekehrt bogenförmig (Bereich 18) in den dritten Profilsteg 11 übergeht. Dabei ist der zweite Profilbereich 17 bevorzugt eben ausgebildet. Der bogenförmige erste Profilbereich 16 schließt bevorzugt einen Winkel zwischen 210° und 240° ein.

Die vorbeschriebene Gestaltung der Wulst 12 ist auf die Gestaltung eines querschnittlich C-förmigen, leisten- bzw. klammerförmigen Klemmelementes 19 bzw. dessen beiden bogenförmigen Enden 19a geometrisch abgestimmt, und zwar derart, dass das Klemmelement 19 in einer Vormontageposition gegenüber einem einzelnen Flanschprofil 3 verschwenkbar ist.

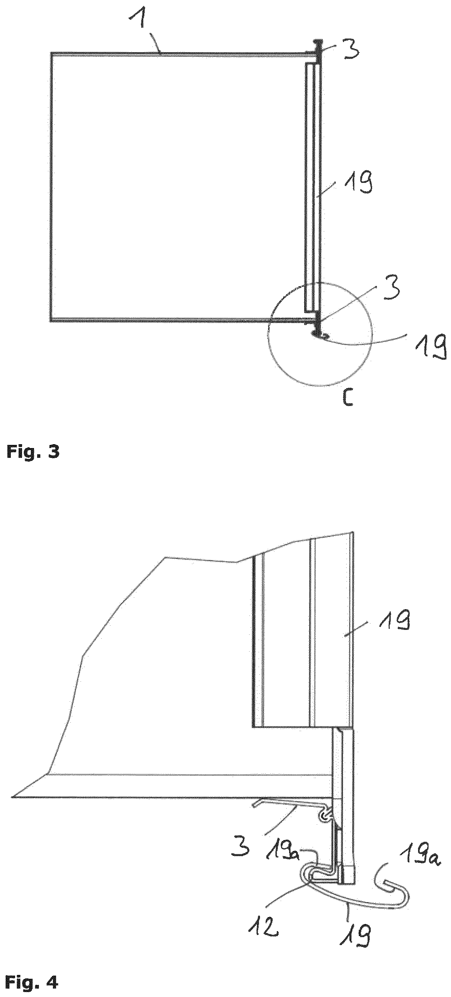

Zur Erläuterung ist in den Fig. 3 und 4 ein bereits an einer Wanddecke oder dgl. aufgehängtes Luftkanalelement 1 eines zu bildenden Luftkanales dargestellt. Dazu wird das C-förmige Klemmelement 19 zunächst auf ein (vorzugsweise unteres) Flanschprofil 3 des bereits montierten Luftkanalelementes 1 aufgesteckt bzw. aufgeschoben und kann aufgrund der Gestaltung der Wulst 12 des Flanschprofiles 3 um ein gewisses Maß (z.B. 40°) nach unten kippen. Diese Situation ist in den Fig. 3 und 4 dargestellt.

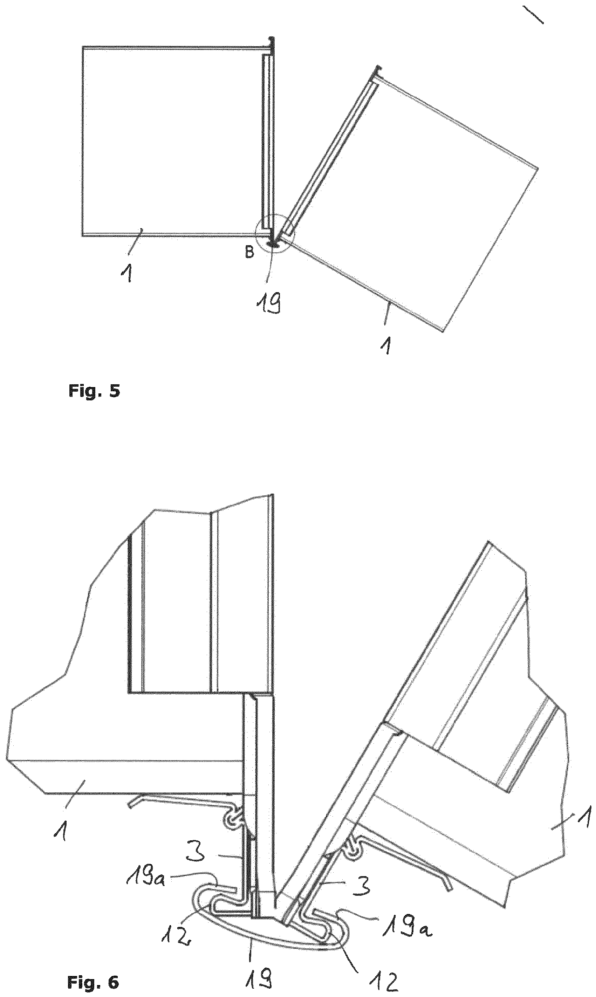

Anschließend (Fig. 5 und 6) wird das zugeordnete Flanschprofil 3 eines nächsten (zweiten) Luftkanalelementes 1 (und damit das nächste Luftkanalelement 1) mit seiner entsprechend gestalteten Wulst 12 in das andere Ende 19a des C-förmigen Klemmelementes 19 eingehängt.

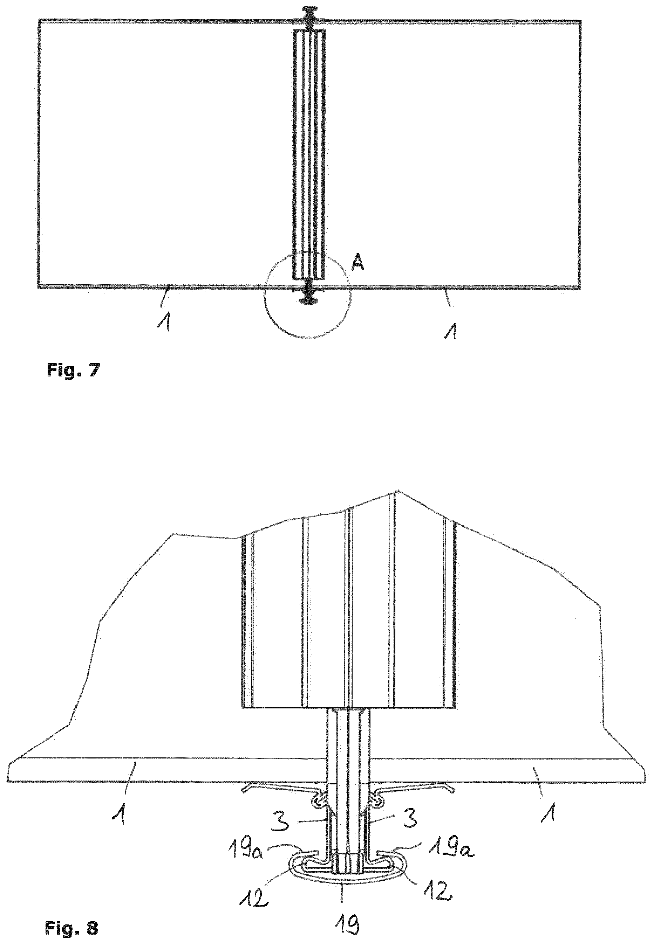

Nachfolgend (Fig. 7 und 8) wird das C-förmige Klemmelement 19 gemeinsam mit dem zweiten Luftkanalelement 1 nach oben geschwenkt und in der Endmontageposition am bereits montierten Luftkanalelement 1 befestigt. Dazu wird auf die beiden aneinander anliegenden oberen Flanschprofile 3 ein Klemmelement 19 oder ein anderes Befestigungsmittel aufgesteckt genauso wie auf die jeweils beiden seitlichen Flanschprofile 3.

Da das jeweils nächste Luftkanalelement 1 zunächst einfach eingehängt und dann nur in die Endposition verschwenkt werden muss, kann die Montage von einer einzigen Person durchgeführt werden.

Natürlich ist die Erfindung nicht auf die dargestellten Ausführungsbeispiele beschränkt. Weitere Ausgestaltungen sind möglich, ohne den Grundgedanken zu verlassen. Das jeweilige Flanschprofil 3 kann auch einstückig mit der zugeordneten Kanalwand 2 des jeweiligen Luftkanalelementes 1 ausgebildet sein, d.h. das Flanschprofil 3 ist dann integraler Bestandteil der jeweiligen Kanalwand 2.

### Bezugszeichenliste:

- 1: Luftkanalelement
- 2: Kanalwand
- 2a: Einsteckrand
- 3: Flanschprofil
- 4: Eckwinkel
- 5: Kammer
- 6: innerer Profilschenkel
- 6a: rillenförmige Einbuchtung
- 7: äußerer Profilschenkel
- 7a: Einführschräge
- 8: Einführbereich
- 9: erster Profilsteg
- 10: zweiter Profilsteg
- 11: dritter Profilsteg
- 12: Wulst
- 13: doppellagiger Profilbereich
- 14: Auswölbung
- 15: Dichtmittel
- 16: erster Profilbereich
- 17: zweiter Profilbereich
- 18: Bereich
- 19: Klemmelement
- 19a: bogenförmiges Ende

## Patentansprüche

1. Luftkanal mit rechteckigen Luftkanalelementen (1) mit jeweils vier Kanalwänden (2) und mit jeweils wenigstens einem Rahmenprofil, welches aus vier über Eckwinkel (4) miteinander verbundenen Flanschprofilen (3) gebildet ist, die am Außenrand an jeder Seite eine Wulst (12) aufweisen, wobei stirnseitig aneinander anliegende Flanschprofile (3) benachbarter Luftkanalelemente (1) im Bereich zweier aneinander anliegender Wülste (12) jeweils mit einem klammerartigen Klemmelement (19) verbunden sind, welches die beiden Wülste (12) umgreift, wobei das jeweilige Klemmelement (19) querschnittlich C-förmig ausgebildet ist und wobei die jeweilige Wulst (12) einen bogenförmigen ersten Profilbereich (16) und einen daran angrenzenden, einen Hinterschnitt bildenden ebenen zweiten Profilbereich (17) aufweist,
**dadurch gekennzeichnet,**
**dass** die Geometrien jedes bogenförmigen Endes (19a) des jeweiligen C-förmigen Klemmelementes (19) und jeder Wulst (12) zumindest des jeweils den unteren Rahmensteg des Rahmenprofils bildenden Flanschprofils (3) so aufeinander abgestimmt sind, dass das auf ein Luftkanalelement (1) aufgesteckte oder aufgeschobene Klemmelement (19) sich mit seinem bogenförmigen Ende (19a) über den zweiten Profilbereich (17) der Wulst (12) erstreckt und in einer Vormontageposition gegenüber dem Flanschprofil (3) nach unten derart verschwenkbar ist, dass in der Vormontageposition das zugeordnete Flanschprofil (3) eines nächsten Luftkanalelementes (1) mit seiner entsprechend gestalteten Wulst (12) in das andere bogenförmige Ende (19a) des nach unten verschwenkten Klemmelementes (19) einhängbar ist.

2. Luftkanal nach Anspruch 1,
**dadurch gekennzeichnet,**
**dass** das jeweilige Flanschprofil (3) ein Einzelprofil ist, das auf einen Einsteckrand (2a) einer Kanalwand (2) des jeweiligen Luftkanalelementes (1) aufgeschoben ist.

3. Luftkanal nach Anspruch 1,
**dadurch gekennzeichnet,**
**dass** das jeweilige Flanschprofil (3) einstückig mit der zugeordneten Kanalwand (2) des jeweiligen Luftkanalelementes (1) ausgebildet ist.

4. Luftkanal nach Anspruch 1, 2 oder 3,
**dadurch gekennzeichnet,**
**dass** der bogenförmige erste Profilbereich (16) einen Winkel zwischen 210° und 240° einschließt.

## Claims

1. Air duct with rectangular air duct elements (1) each having four duct walls (2) and at least one frame profile which is formed from four flange profiles (3) connected to one another via corner brackets (4) and having a bead (12) on the outer edge on each side, wherein flange profiles (3) of adjacent air duct elements (1) that abut against one another at the end face are each connected, in the region of two abutting beads (12), to a clamp-like clamping element (19) that engages around the two beads (12), wherein the respective clamping element (19) is C-shaped in cross-section and wherein the respective bead (12) has an arcuate first profile region (16) and an adjoining flat second profile region (17) forming an undercut,
**characterised in that**
the geometries of each arcuate end (19a) of the respective C-shaped clamping element (19) and each bead (12) of at least the flange profile (3) forming the respective lower frame web of the frame profile are matched to one another such that the clamping element (19) placed or pushed onto an air duct (1) extends with its arcuate end (19a) over the second profile region (17) of the bead (12) and, in a pre-assembly position with respect to the flange profile (3), can be pivoted downwards in such a way that in the pre-assembly position, the associated flange profile (3) of a next air duct element (1) can be hooked by its correspondingly shaped bead (12) into the other arcuate end (19a) of the downwardly pivoted clamping element (19).

2. Air duct according to claim 1,
**characterised in that**
the respective flange profile (3) is an individual profile that is pushed onto an insertion edge (2a) of a duct wall (2) of the respective air duct element (1).

3. Air duct according to claim 1,
**characterised in that**
the respective flange profile (3) is formed in one piece with the associated duct wall (2) of the respective air duct element (1).

4. Air duct according to claim 1, 2 or 3,
**characterised in that**
the arcuate first profile region (16) subtends an angle between 210° and 240°.

## Revendications

1. Canal d'air avec des éléments de canal d'air rectangulaires (1) avec respectivement quatre parois de canal (2) et avec respectivement au moins un profilé de cadre qui est formé de quatre profilés de bride (3) connectés entre eux par l'intermédiaire de cornières d'angle (4), profils qui présentent sur le bord extérieur de chaque côté un bourrelet (12), dans lequel des profilés de bride (3) adjacents frontalement d'éléments de canal d'air (1) voisins sont connectés respectivement dans la zone de deux bourrelets (12) adjacents l'un à l'autre avec un élément de serrage (19) de type pince qui entoure les deux bourrelets (12), dans lequel l'élément de serrage (19) respectif est conçu en forme de C en section transversale et dans lequel le bourrelet (12) respectif présente une première zone de profilé en forme d'arc (16) et une seconde zone de profilé plane (17) adjacente à celle-ci et formant une contre-dépouille,
**caractérisé en ce que**
les géométries de chaque extrémité en forme d'arc (19a) de l'élément de serrage en forme de C (19) respectif et de chaque bourrelet (12) au moins du profilé de bride (3) formant respectivement la nervure de cadre inférieure du profilé de cadre sont adaptées l'une à l'autre de sorte que l'élément de serrage (19) branché ou enfilé sur un élément de canal d'air (1) s'étend avec son extrémité en forme d'arc (19a) au-dessus de la seconde zone de profilé (17) du bourrelet (12) et peut pivoter vers le bas dans une position de prémontage par rapport au profilé de bride (3) de sorte, que, dans la position de prémontage, le profilé de bride (3) associé d'un élément de canal d'air (1) suivant peut être accroché avec son bourrelet (12) de forme correspondante dans l'autre extrémité en forme d'arc (19a) de l'élément de serrage (19) pivoté vers le bas.

2. Canal d'air selon la revendication 1,
**caractérisé en ce que**
le profilé de bride respectif (3) est un profilé individuel qui est enfilé sur un bord de branchement (2a) d'une paroi de canal (2) de l'élément de canal d'air (1) respectif.

3. Canal d'air selon la revendication 1,
**caractérisé en ce que**
le profilé de bride respectif (3) est formé d'un seul tenant avec la paroi de canal (2) associée de l'élément de canal d'air (1) respectif.

4. Canal d'air selon la revendication 1, 2 ou 3,
**caractérisé en ce que**
la première zone de profilé en forme d'arc (16) forme un angle entre 210° et 240°.
